# EUROPÄISCHE PATENTSCHRIFT

(11) **EP 3 171 137 B1**
(45) Veröffentlichungstag und Bekanntmachung des Hinweises auf die Patenterteilung: **04.04.2018**
(21) Anmeldenummer: 15195928.5
(22) Anmeldetag: 23.11.2015
(51) Int. Cl.: G01D 5/14, G01D 5/12

(54) **DREHGEBERANORDNUNG**
ROTARY ENCODER ASSEMBLY
SYSTÈME D'ENCODEUR

(43) Veröffentlichungstag der Anmeldung: 24.05.2017
(73) Patentinhaber: Baumer Hübner GmbH, 10589 Berlin (DE)
(72) Erfinder: Hiller, Herr Bernhard, 13465 Berlin (DE); Hanke, Martin, 10319 Berlin (DE)
(74) Vertreter: Strauss, Steffen

(56) Entgegenhaltungen:
- WO-A1-03/098147
- WO-A1-2014/135453
- DE-T2- 60 100 635

## Beschreibung

Die Erfindung betrifft eine Drehgeberanordnung mit einer Messvorrichtung zur Bestimmung einer Drehposition eines drehbaren Körpers, wie etwa einer Welle eines Motors.

Verschiedene Drehgeberanordnungen sind aus dem Stand der Technik bekannt. Die bekannten Systeme sind jedoch ungenau, empfindlich oder erfordern eine hohe Präzision bei der Montage.

Aufgabe der Erfindung ist es, eine Lösung bereitzustellen, die eine hohe Präzision liefert, einfach zu montieren und gleichzeitig in rauen Umgebungen einsetzbar ist.

Gelöst wird diese Aufgabe durch eine Drehgeberanordnung mit einer Messvorrichtung zur Bestimmung einer Drehposition eines drehbaren Körpers mit wenigstens einer an dem Körper befestigbaren magnetischen Maßverkörperung und wenigstens einer Sensoreinrichtung zur Abtastung der Maßverkörperung, wobei die Sensoreinrichtung zumindest teilweise innerhalb eines von der Maßverkörperung umgebenen Raums liegt und die Maßverkörperung von einer umlaufenden magnetischen Abschirmung umgeben und an dieser drehfest angebracht ist.

Die Maßverkörperung erlaubt eine Messung mit einer hohen Präzision. Durch die Montage an dem drehbaren Körper kann auf eigene Lager für die Maßverkörperung verzichtet werden, wodurch sich der Aufbau der Drehgeberanordnung stark vereinfacht. Die magnetische Abschirmung erlaubt den Einsatz auch in rauen Umgebungen, wie zum Beispiel in unmittelbarer Nähe von Elektromotoren oder magnetischen Bremsen, wo starke Magnetfelder auftreten. Bei schnell drehbaren Körpern dient die Abschirmung auch dazu, die magnetische Maßverkörperung mechanisch gegenüber Fliehkräften, insbesondere bei hohen Drehzahlen zu fixieren. Sie macht somit die bislang als mechanischen Schutz eingesetzten Bandagen überflüssig.

Ein weiterer Vorteil der erfindungsgemäßen Ausgestaltung liegt darin, dass die Sensoreinrichtung und gegebenenfalls eine Auswertelektronik auf einen kleinen Bereich um die Drehachse herum beschränkt sind. Dadurch kann die Sensoreinrichtung mit zusätzlichen Sensoren bestückt werden, ohne dass lange Leitungen um den drehbaren Körper herum notwendig sind, wie bei einer um den Außenumfang des drehbaren Körpers angeordneten Sensoreinrichtung.

Die erfindungsgemäße Lösung kann mit den folgenden, jeweils für sich vorteilhaften Ausgestaltungen und Weiterentwicklungen weiter verbessert werden.

So sollte die Abschirmung aus einem magnetisch guten leitenden, insbesondere ferromagnetischen Material gefertigt sein, um Störfelder gut abzuschirmen. Das Material und die Materialstärke können so angepasst sein, dass die Abschirmung bei der im Betrieb auftretenden magnetischen Flussdichte nicht in die Sättigung gerät. Die Abschirmung kann ferner ein Dreh- oder Frästeil sein. Bei einer rotationssymmetrischen Ausgestaltung ist eine solche Fertigung einfach. Auch eine Herstellung als Stanzbiegeteil ist möglich.

Alternativ oder kumulativ kann die Abschirmung ein Tiefziehteil sein. Die Herstellung eines Tiefziehteils ist besonders kostengünstig.

Die Abschirmung kann als ein Abschirmkörper, mithin also monolithisch ausgestaltet sein. Der Aufnahmekörper kann eine Aufnahme aufweisen, innerhalb der die Sensoreinrichtung anordenbar ist. Die Aufnahme kann eingefräst oder eingestanzt oder durch Biegen bzw. Falzen eines ferromagnetischen Bleches hergestellt sein.

Die Aufnahme kann an einer in axialer Richtung gelegenen Seite offen, ansonsten aber allseitig geschlossen ausgestaltet sein. Durch die offene Seite kann die Montage und ortsfeste Fixierung der Sensoreinrichtung erfolgen. Die Aufnahme kann mechanischen Schutz vor äußeren Einflüssen bieten. Ferner kann die Aufnahme auch eine Abschirmung gegen elektrische oder magnetische Felder bilden, sodass die darin angeordnete Maßverkörperung und die Sensoreinrichtung nicht von äußeren Störfeldern beeinflusst werden.

Die Maßverkörperung kann an der der Sensoreinrichtung zugewandten, die Sensoreinrichtung in einer Umfangsrichtung umschließenden Innenseite der Aufnahme angeordnet sein. Dadurch ist eine kompakte Ausgestaltung möglich.

Die Drehgeberanordnung ist bevorzugt lagerlos und kann direkt auf einer Welle eines Motors, insbesondere Elektromotors, oder einem anderen drehbaren Körper befestigt werden. Hierzu kann ein Befestigungsabschnitt dienen, der mit der Abschirmung drehfest verbunden ist, vorzugsweise aber von dieser monolithisch ausgebildet ist. Der Befestigungsabschnitt erlaubt bevorzugt eine kupplungsfreie Verbindung mit der Welle des Motors.

Diese Art der Anbringung kann insbesondere bei Elektromotoren die Sensoreinrichtung starken magnetischen Störfeldern aussetzen, weil sich die Drehgeberanordnung sehr nahe am Elektromotor mit gegebenenfalls zusätzlicher elektromagnetisch belüfteter Bremse befindet. An dieser Stelle können die Magnetfelder des Elektromotors und/oder der Bremse in den Drehgeber eintreten.

Um die Sensoreinrichtung vor diesen Störfeldern zu schützen, umfasst die Abschirmung gemäß einer weiteren vorteilhaften Ausgestaltung einen mit der umlaufenden, die Maßverkörperung tragenden Abschirmung verbundenen scheibenförmigen Abschnitt, der bevorzugt mit dem drehbaren Körper drehfest verbunden ist und sich senkrecht zur Drehachse erstreckt. Die Abschirmscheibe kann mit der umlaufenden Abschirmung monolithisch zu dem Abschirmkörper vereint oder an der umlaufenden, die Maßverkörperung tragenden Abschirmung als separates Teil angebracht sein, beispielsweise über eine umlaufende Vercrimpung, Verschweißung oder durch Befestigungsmittel.

An dem scheibenförmigen Abschnitt der Abschirmung kann der Befestigungsabschnitt angebracht sein, mit dem die Drehgeberanordnung an den drehbaren Körper bevorzugt unmittelbar, insbesondere aber ohne zwischengeschaltete Kupplung, angebracht wird. Die Sensoreinrichtung kann innerhalb der Kubatur der Abschirmung angeordnet sein. Die Sensoreinrichtung ist dadurch geschützt. Zudem ist der Platzbedarf der Drehgeberanordnung gering, da der umbaute Raum ausgenutzt wird.

Die Sensoreinrichtung kann ortsfest montierbar ausgestaltet sein, sodass sie sich während der Messung nicht mit dem Körper mit dreht. Bevorzugt sind die Sensoreinrichtung auf der einen und die Maßverkörperung mit der Abschirmung auf der anderen Seite berührungsfrei zueinander angeordnet und beispielsweise durch einen Luftspalt voneinander getrennt. Der Luftspalt kann koaxial zu der Drehachse des Körpers verlaufen.

Die Maßverkörperung und die Sensoreinrichtung sind bei einer lagerlosen Ausgestaltung der Drehgeberanordnung bevorzugt auf baulich getrennten Teilen untergebracht, die keinerlei mechanische Verbindung miteinander aufweisen. Dadurch ist die Drehgeberanordnung verschleißarm, einfach in der Wartung und kostengünstig herzustellen.

Die Drehgeberanordnung kann eine Trägerplatte aufweisen, die zumindest teilweise innerhalb des von der Maßverkörperung umgebenen Raums liegt und bevorzugt konzentrisch zur Abschirmung bzw. Drehachse angeordnet ist. An oder auf der Trägerplatte können die Sensoreinrichtung und eine Auswerteelektronik angeordnet sein. Die Trägerplatte erstreckt sich bevorzugt senkrecht zur Drehachse, insbesondere gegenüber der scheibenförmigen Abschirmung. Dadurch wird die Drehgeberanordnung kompakt, da kein Extraraum für die Trägerplatte in der Abschirmung zur Verfügung gestellt werden muss. Vorzugsweise liegt die Trägerplatte vollständig innerhalb des von der Maßverkörperung umgebenen Raums.

Die Trägerplatte kann ortsfest sein. Sie ist bevorzugt baulich von der Maßverkörperung und der sie tragenden Abschirmung getrennt. Sie ist insbesondere mit der Abschirmung und der Maßverkörperung nicht mechanisch verbunden, sondern bevorzugt durch eine umlaufende Lücke, die konzentrisch sein kann, getrennt.

Die Trägerplatte kann auch eine Leiterplatte oder eine Platine sein. Dadurch kann auf aufwändige Montagevorgänge oder spezielle Halterungen für die Sensoreinrichtung und die Auswerteelektronik verzichtet werden.

Bevorzugt ist die Trägerplatte jedoch aus einem ferromagnetischen Material und somit Teil der Abschirmung. Die Trägerplatte kann, um die Abschirmung zu verstärken, einen axial, vorzugsweise zum drehbaren Körper hin, vorspringenden Rand aufweisen, der die Sensoreinrichtung zumindest abschnittsweise außen umgibt. Die Trägerplatte ist bei dieser Ausgestaltung etwa pfannenförmig. Der Rand der Trägerplatte weist einen möglichst geringen Abstand zu der umlaufenden, die Maßverkörperung tragenden Abschirmung auf und kann insbesondere parallel zur zylinderförmigen Innenfläche der Abschirmung verlaufen.

Die Sensoreinrichtung sowie die Auswerteelektronik befinden sich bevorzugt zwischen der Trägerplatte und der Abschirmung.

Die Abschirmung kann glocken- oder topfförmig ausgebildet sein, um einen möglichst umfassenden Schutz und eine möglichst umfassende Abschirmung zu gewährleisten und gleichzeitig den Zugriff auf den Innenraum von einer Seite axial zu ermöglichen. Die Glocke liegt konzentrisch zur Drehachse. Sie kann insbesondere rotationssymmetrisch ausgebildet sein und an einer Seite, die von der Drehachse geschnitten wird, insbesondere vollständig offen sein. An den anderen Seiten kann die Glocke geschlossen sein. Der Boden der Glocke weist bei am Körper montierter Drehgeberanordnung bevorzugt zu dem Elektromotor. Die Glocken- oder Topfform bietet so eine gute Abschirmung gegen axiale und radiale Magnetfelder.

Die Drehgeberanordnung kann eine zusätzliche Abschirmung umfassen. Die zusätzliche Abschirmung kann an die erste Abschirmung angepasst sein und insbesondere invers zu dieser ausgestaltet sein. Beispielsweise kann die zusätzliche Abschirmung ebenfalls glockenförmig geformt und in die bestehende Abschirmung oder über die bestehende Abschirmung geschoben sein. Der Boden der zusätzlichen Abschirmung kann der scheibenförmigen Abschirmung gegenüberliegen, wobei die Sensoreinrichtung bzw. die Trägerplatte zwischen dem Boden der zusätzlichen Abschirmung und der scheibenförmigen Abschirmung angeordnet sein sollte, um maximal abgeschirmt zu sein. Anstelle einer Glockenform kann in einer besonders einfachen Ausgestaltung die zusätzliche Abschirmung scheibenförmig sein.

Die zusätzliche Abschirmung sollte die offene Seite der Abschirmung mit der Maßverkörperung verschließen, um die Abschirmung zu verbessern.

Die zusätzliche Abschirmung kann ortsfest befestigbar ausgestaltet sein oder drehfest mit der die Maßverkörperung tragenden Abschirmung verbunden sein.

Bei einer ortsfesten Ausgestaltung kann die zusätzliche Abschirmung mit der Trägerplatte verbunden sein und einen Abschnitt zur Anbringung an einer ortsfesten Halterung, beispielsweise dem Gehäuse oder Lagerschild des Elektromotors aufweisen.

Die ortsfeste zusätzliche Abschirmung kann durch einen Luftspalt von der Abschirmung mit der Maßverkörperung getrennt sein, wobei sie mit einer Zylinderfläche bevorzugt die Zylinderfläche der Abschirmung mit der Maßverkörperung in axialer Richtung, also in Richtung der Drehachse, überlappt, um das Eindringen von Streufelder durch den Luftspalt zu verhindern. Bevorzugt ragt die zusätzliche Abschirmung bis über die Maßverkörperung.

Ist die zusätzliche Abschirmung drehfest mit der Abschirmung mit der Maßverkörperung verbunden, so kann sie einen Durchlass aufweisen, durch den sich eine Stütze zu ortsfesten Fixierung der Sensoreinrichtung oder der Trägerplatte an einem Fixpunkt außerhalb der Drehgeberanordnung erstreckt. Der Durchlass kann zentrisch in der Abschirmung sitzen.

Die zusätzliche Abschirmung kann mit dem zylindrischen Abschnitt der Abschirmung mit der Maßverkörperung, beispielsweise über Vercrimpung, Verlötung, Verschweißung, Verpressung, Schrumpfung oder über Befestigungsmittel wie Schrauben, fest verbunden sein. Die Verbindung der beiden Abschirmungen erfolgt bevorzugt über die zylindrische Außenfläche einer der beiden Abschirmungen, bevorzugt der Abschirmung mit der Maßverkörperung. Auch hier können sich die beiden Abschirmungen in axialer Richtung mit ihren Zylinderflächen überlappen, so dass in radialer Richtung die Abschirmungen übereinanderliegen.

Die Messvorrichtung kann mehrere Sensoreinrichtungen umfassen, die die Maßverkörperung an verschiedenen Stellen abtasten. Beispielsweise können zwei Sensoreinrichtungen um 180° versetzt sein oder vier Sensoreinrichtungen um 90° versetzt sein, um eine Rundlauffehler-und/oder eine Taumelfehlerkorrektur zu ermöglichen. Die Signalwege dieser zusätzlichen Sensoren sind kurz, da sich die Auswerteelektronik zentral zwischen diesen Sensoren befinden kann.

Die Sensoreinrichtung kann ferner ausgestaltet sein, Rundlauffehler und Taumelbewegungen zu erfassen und zu kompensieren. Dies ist insbesondere bei einer lagerlosen Ausgestaltung der Drehgeberanordnung von Bedeutung, bei der die Maßverkörperung und die Sensoreinrichtung an unterschiedlichen Referenzpunkten angebracht sind.

Wenn die Drehgeberanordnung eine Auswerteelektronik umfasst, ist zumindest eine teilweise Auswertung der Signale schon in der Drehgeberanordnung und nicht erst in einem nachgeschalteten Schritt möglich. Die Auswerteelektronik kann, wie bereits ausgeführt, zumindest teilweise auf der Trägerplatte angeordnet sein. Dadurch ist sie geschützt und verbraucht wenig Platz. Die Auswerteelektronik kann verschiedene elektrische und elektronische Bauteile umfassen, die zum Beispiel analog oder digital sein können. Es können insbesondere ICs wie ASICs, Prozessoren oder FPGAs vorhanden sein. Es kann eine intelligente Signalverarbeitung oder Auswertelogik vorhanden sein.

Die Signalverarbeitung kann verschiedene Sensorinformationen verknüpfen. Sie kann Filter umfassen, um bestimmte Frequenzen herauszufiltern, etwa Resonanzfrequenzen. Mithilfe der Signalverarbeitung kann eine Signalverbesserung durch Algorithmen wie Offset-, Amplituden-und Phasenregelung erzielt werden. Verbesserungen können auch durch Verwendung mehrerer Sensoren erzielt werden, insbesondere zur Rundlauffehler-und Taumelfehlerkompensation. Die Signalverarbeitung kann ein elektronisches Typenschild beinhalten. Sie kann die Drehlage, Drehgeschwindigkeit und/oder Drehbeschleunigung des Körpers ermitteln. Die Signalverarbeitung kann Signale an einer Schnittstelle ausgeben.

Die Maßverkörperung kann eine innere Zylindermantelfläche bilden. Sie kann im montierten Zustand um eine Drehachse des drehbaren Körpers herum verlaufen. Eine Zylindermantelfläche erlaubt dabei eine Rotation mit nahezu gleichem Abstand von der Drehachse. Ferner kann ein Versatz entlang der Drehachse, zum Beispiel durch eine ungenaue Montage oder durch Temperatureffekte ausgeglichen werden. In einer anderen Ausgestaltung kann die Maßverkörperung die Form eines anderen Rotationskörpers bilden, etwa eine Kegelstumpfmantelfläche.

Die Sensoreinrichtung kann vollständig innerhalb des von der Maßverkörperung umgebenen Raums liegen, um eine gut geschützte und kompakte Ausgestaltung zu ermöglichen.

Die Maßverkörperung kann an einer Innenseite der Abschirmung angeordnet sein. Die Maßverkörperung kann Teil der Abschirmung sein oder direkt mit der Abschirmung verbunden sein. Dadurch wird der Produktionsaufwand niedrig gehalten und der Platzbedarf ist gering.

Die Maßverkörperung kann an einer Innenseite eines Zylinderabschnitts angeordnet sein. Die Abschirmung kann weitere Abschnitte, etwa scheiben-, kugelschalen- oder kegelmantelförmige Abschnitte aufweisen. Ein solcher Abschnitt kann insbesondere alleine oder zusammen mit anderen Teilen geschlossen sein, um einen guten Schutz oder eine gute Abschirmung zu gewährleisten. Die Messvorrichtung kann zur Bestimmung eines Feinwertes der Drehposition ausgebildet sein. Da ein solcher Feinwert nicht unbedingt eindeutig innerhalb einer 360°-Umdrehung sein muss, kann die Drehgeberanordnung eine weitere Messvorrichtung zur Bestimmung eines Grobwertes der Drehposition aufweisen. Durch eine Kombination des Feinwertes mit dem Grobwert kann eine feinaufgelöste eindeutige Absolutposition ermittelt werden.

Die weitere Messvorrichtung kann einen ein- oder mehrteiligen Zentrumsmagneten zur Anbringung an dem Körper umfassen. Die weitere Messvorrichtung kann eine weitere Sensoreinrichtung für den Zentrumsmagneten aufweisen. Diese kann insbesondere auf der Trägerplatte und/oder innerhalb eines von der Maßverkörperung umgebenen Raums liegen. Der Zentrumsmagnet kann an und/oder in der Abschirmung anbringbar und/oder mit dieser drehfest verbindbar sein.

Der Zentrumsmagnet kann gleichzeitig zur Bestimmung einer Singleturn- und einer Multiturn-Absolutlage mit einem Wiegand-Sensor und mit einer anderen Technik dienen.

Die weitere Messvorrichtung kann zumindest teilweise innerhalb des von der Maßverkörperung umgebenen Raums liegen, insbesondere, wenn es sich um eine magnetisch messende Messvorrichtung handelt. Dadurch ist wieder eine Abschirmung von externen Magnetfeldern möglich.

So kann die weitere Messvorrichtung einen Wiegandsensor umfassen, sodass beispielsweise nicht nur eine absolute Singleturnposition, sondern auch eine Multiturnposition ermittelbar ist. Dank der Abschirmung kann mit Hilfe der erfindungsgemäßen Ausgestaltung der gegenüber magnetischen Störfeldern sehr empfindliche Wiegandsensor nunmehr auch in unmittelbarer Nähe eines starken Magnetfeldes eingesetzt werden.

Zwei Spuren können verschiedene Maßteilungen aufweisen, um eine Singleturn-oder Teilkreis-Absolutlage mithilfe des Nonius-Prinzips zu ermöglichen. Zur Messung können entsprechend mehrere Sensoreinrichtungen vorhanden sein.

Die erfindungsgemäße Abschirmung ermöglicht gerade die Verwendung so empfindlicher Messvorrichtung wie dem Wiegandsensor oder einem Nonius selbst in der Nähe starker magnetischer Störfelder.

Die Maßverkörperung kann inkrementell sein. Beispielsweise kann ein regelmäßiges Muster die Maßverkörperung bilden. Eine solche Maßverkörperung kann einfach herstellbar sein.

Die Abschirmung kann zumindest bereichsweise und bevorzugt an der Oberfläche mit Lacken oder Gießharzen versehen sein, um beispielsweise unerwünschte Eigenfrequenzen zu dämpfen oder zu verschieben. Zur Schwingungsdämpfung können ferner Absorber und Dämmmatten an der Abschirmung verwendet werden. Die Maßverkörperung kann mehr als eine Spur aufweisen. Dadurch kann eine genauere oder eine schnellere Messung möglich sein. Es können mehrere Sensoreinrichtungen zur Abtastung mehrerer Spuren vorhanden sein. Eine Sensoreinrichtung kann mehrere Sensorelemente zur Abtastung mehrerer Spuren aufweisen. Die Drehgeberanordnung kann mehrere Maßverkörperungen mit jeweils mindestens einer Spur aufweisen.

Die Spur kann eine oder mehrere Nullmarken aufweisen, um die Bestimmung der Drehposition zu ermöglichen. Es kann eine Sensoreinrichtung zur Abtastung einer Nullmarke vorhanden sein.

Die Spur kann Pseudo-Random-Code enthalten, um eine Singleturn-Absolutlage zu ermitteln. Zur Abtastung einer solchen Spur können entsprechende Sensoreinrichtungen vorhanden sein.

Die Drehgeberanordnung kann zusätzliche Magnete auf einen Teilkreis aufweisen für die Bestimmung einer Multiturn-Absolutlage mithilfe eines µ-Generators. Die Drehgeberanordnung kann entsprechende Sensoreinrichtungen aufweisen.

Es können ein Beschleunigungssensor, ein Drehratenssensor und/oder ein Temperatursensor vorhanden sein, die insbesondere innerhalb des von der Maßverkörperung umgebenen Raums liegen. Diese können an oder auf der Trägerplatte angeordnet sein.

Die Auswerteelektronik und Signalverarbeitung können an die oben beschriebenen Messprinzipien angepasst sein.

Die Auswerteelektronik und/oder die Signalverarbeitung können Eingänge und Schnittstellen für weitere Daten oder Messwerte umfassen, etwa für einen Wicklungstemperatursensor.

Die Auswerteelektronik und/oder die Signalverarbeitung können dazu ausgestaltet sein, die Werte von mehreren Sensoreinrichtungen zu vergleichen und dadurch die Drehposition des Körpers sicher zu bestimmen. Beispielsweise können mehrere Inkrementalspuren miteinander oder eine Inkrementalspur mit einem Grobwert verglichen werden.

Im Folgenden wird die Erfindung anhand vorteilhafter Ausgestaltungen mit Bezug auf die Zeichnungen beispielhaft näher erläutert. Die dabei dargestellten vorteilhaften Weiterentwicklungen und Ausgestaltungen sind jeweils voneinander unabhängig und können beliebig miteinander kombiniert werden, je nachdem, wie dies im Anwendungsfall notwendig ist.

Es zeigen:
- Fig. 1: eine Frontalansicht einer erfindungsgemäßen Drehgeberanordnung;
- Fig. 2: eine Schnittansicht der Drehgeberanordnung der Fig. 1 in der mit II bezeichneten Ebene;
- Fig. 3: eine Schnittansicht einer weiteren Ausgestaltung einer erfindungsgemäßen Drehgeberanordnung;
- Fig. 4: eine Schnittansicht einer weiteren Ausgestaltung einer erfindungsgemäßen Drehgeberanordnung.

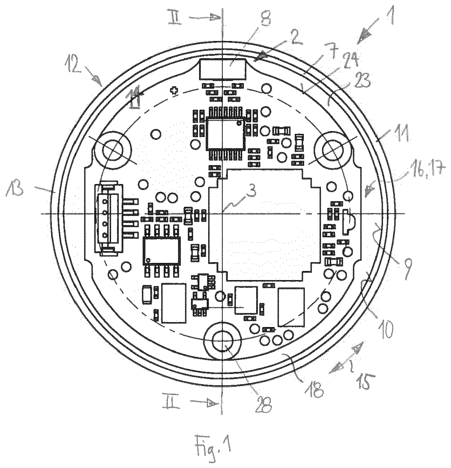

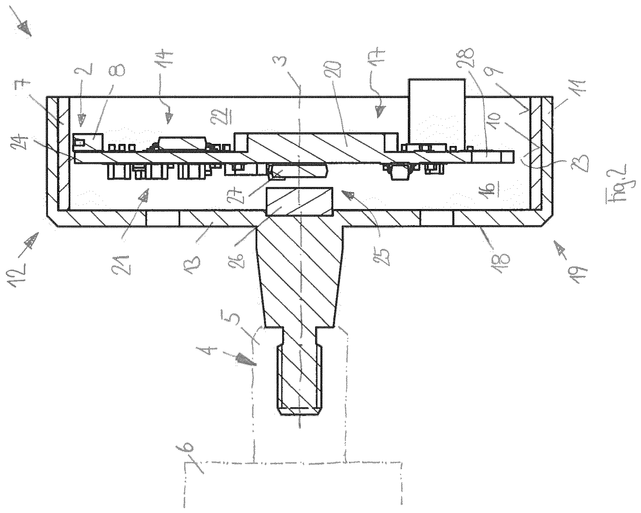

Zunächst werden Aufbau und Funktion einer erfindungsgemäßen Drehgeberanordnung 1 mit Hilfe der Fig. 1 und 2 beschrieben.

Die in den Figuren dargestellte Drehgeberanordnung 1 umfasst eine Messvorrichtung 2 zur Bestimmung einer Drehposition eines um eine Achse 3 drehbaren Körpers. Die Drehgeberanordnung 1 ist über einen Befestigungsabschnitt 4 an dem Körper, insbesondere der Welle 5 eines Elektromotors 6, unmittelbar, ohne zwischengeschaltete Kupplung befestigbar.

Die Messvorrichtung 2 umfasst eine zur Achse 3 konzentrische, umlaufende magnetische Maßverkörperung 7 und eine Sensoreinrichtung 8 zur Abtastung der Maßverkörperung 7. Die Maßverkörperung 7 bildet eine innere Zylindermantelfläche 9 gegenüber der Sensoreinrichtung 8 aus und ist an einer ebenfalls zylindrischen Innenfläche 10 eines Zylinderabschnitts 11 einer Abschirmung 12 angeordnet. Die Abschirmung 12 ist aus einem ferromagnetischen Werkstoff gefertigt.

Die Abschirmung 12 kann von einem Abschirmkörper 13 gebildet sein, der eine monolithische Grundstruktur zur Verfügung stellt.

Die Sensoreinrichtung 8 liegt innerhalb eines von der Maßverkörperung 7 umgebenen Raums 14 und ist von der umlaufenden magnetischen Abschirmung 12 umgeben.

Die Abschirmung 12 dient einerseits zur magnetischen Abschirmung der Sensoreinrichtung 8 gegenüber äußeren Magnetfeldern, wie sie beispielsweise von einem Elektromotor 6 erzeugt werden. Zum anderen wird durch die Abschirmung 12 auch ein mechanischer Schutz erzielt.

Das magnetische Messprinzip der Sensoreinrichtung 8 erlaubt vergleichsweise hohe Toleranzen bei der Montage. Eine erfindungsgemäße Drehgeberanordnung 1 kann auch vom Kunden selbst montiert werden.

Die Maßverkörperung 7 kann beispielsweise inkrementell sein, so dass ohne Kenntnis der vorherigen Positionen die jetzige Position nicht absolut ermittelt werden kann. Beispielsweise können magnetische Pole mit konstantem Abstand voneinander entlang der Umfangsrichtung 15 hintereinander angeordnet sein.

In einer anderen Ausgestaltung kann die Maßverkörperung 7 auch eine Messung der Absolutposition ohne weitere Vergleiche ermöglichen. Beispielsweise kann ein Pseudo-Random-Code vorhanden sein.

Der Abschirmkörper 13 bildet eine Aufnahme 16 in Form einer in den Abschirmkörper 13 eingeformten Ausnehmung 17, die an ihrer inneren Umfangsseite 10 mit der Maßverkörperung 7 versehen ist. Die Aufnahme 16 kann durch Umformen, beispielsweise Tiefziehen oder Biegen, oder durch ein spanabhebendes Verfahren wie Drehen oder Fräsen hergestellt sein.

Die Abschirmung 12 weist zum Befestigungsabschnitt 4, also zu dem Elektromotor 6 hin, von dem erhebliche magnetische Störfelder ausgehen können, einen scheibenförmigen Abschnitt 18 auf, der den von der Maßverkörperung 7 umgebenen Raum axial abschirmt. Zusammen mit dem die Maßverkörperung 7 haltenden ringförmigen Zylinderabschnitt 11 der Abschirmung 12 entsteht so eine Topf- oder Glockenform 19.

Die Glocke 19 kann durch Biegen, Tiefziehen oder Fräsen monolithisch hergestellt sein, aber auch mehrteilig aufgebaut sein, solange zwischen den Bestandteilen der Glocke 19 eine Verbindung besteht, die den magnetischen Fluss weiterleitet.

Die Drehgeberanordnung 1 umfasst ferner eine senkrecht zur Drehachse 3 angeordnete Trägerplatte 20 in Form einer Leiterplatte oder einer Hauptplatine, auf der die Sensoreinrichtung 8 angebracht ist.

Bevorzugt ist jedoch die Trägerplatte 20 aus einem ferromagnetischen Werkstoff gefertigt, so dass sie die Abschirmung 12 ergänzt. Auf der Trägerplatte ist die Sensoreinrichtung 8 angebracht. Ferner ist darauf eine Auswerteelektronik 21 angeordnet, die zur Verarbeitung und Auswertung der von der Sensoreinrichtung 8 kommenden Signale dient. Eine Signalverarbeitung kann nach den oben beschriebenen Prinzipien erfolgen. Sie kann teilweise oder komplett in der Auswerteelektronik 21 auf der Trägerplatte 20 oder erst in nachgeschalteten Schritten außerhalb der Drehgeberanordnung 1 erfolgen.

Um die axiale Abschirmung des scheibenförmigen Abschnitts 18 der Abschirmung 12 auf der in Richtung der Drehachse 3 gegenüberliegenden Seite zu komplettieren, befinden sich die Sensoreinrichtung 8 und die Auswerteelektronik 21 bevorzugt zwischen dem scheibenförmigen Abschnitt 18 und der Trägerplatte 20. Die Trägerplatte 20, zumindest aber die Sensoreinrichtung 8, befindet sich bevorzugt vollständig innerhalb der Kubatur 22 der Abschirmung 12. Sie kann die Abschirmung an der vom Elektromotor 6 abgewandten Seite verschließen. Die Kubatur 22 beschreibt dabei das von dem Abschirmkörper aufgespannte Raumgebiet.

Die Drehgeberanordnung 1 ist bevorzugt lagerlos. Die Trägerplatte 20 mit der Sensoreinrichtung 8 und der Auswerteelektronik 21 weist folglich dann keine bauliche Verbindung mit der Abschirmung 12 und der daran sich befindlichen Maßverkörperung 7 auf. Die Trägerplatte 20 und die Abschirmung 12 sind durch eine umlaufende, ringförmige Lücke 23 voneinander getrennt.

Die Lücke 23 sollte so klein wie möglich sein. Um das Eindringen von magnetischen Störfeldern durch die Lücke 23 zu verhindern, kann die Trägerplatte 20 an ihrem Außenumfang 24 zum Elektromotor 6 bzw. am Befestigungsabschnitt 4 hin angebracht sein und einen umlaufenden, axial vorspringenden Rand (nicht dargestellt) bilden, der der Maßverkörperung 7 gegenüberliegt und parallel und beabstandet zur inneren Zylindermantelfläche 9 der Maßverkörperung 7 verläuft.

Die Messvorrichtung 2 ist zur Bestimmung eines Feinwertes der Drehposition der Welle 4 ausgebildet. Diese ist im gezeigten Fall nicht über den gesamten Umfang absolut und es ist hierbei unbekannt, in welchem Teilbereich des Umfangs gerade gemessen wird. Um diese Mehrdeutigkeit zu eliminieren, kann die Drehgeberanordnung 1 eine weitere Messvorrichtung 25 aufweisen. Diese ist im Zentrum der Drehgeberanordnung 1 angeordnet und liegt auf der Drehachse 3.

Die weitere Messvorrichtung 25 umfasst einen ein- oder mehrteiligen Zentrumsmagneten 26, der mit dem Abschirmkörper 13 drehfest verbunden ist und somit mit der Welle 5 mitdreht. Eine weitere Sensoreinrichtung 27 erfasst das von dem Zentrumsmagneten 25 ausgehende Magnetfeld. Anschließend wird daraus ein Grobwert der Drehposition der Welle 5 ermittelt. Durch Kombination der Feinwerte aus der Messvorrichtung 2 und der Grobwerte, die mit der weiteren Messvorrichtung 25 gemessen werden, können eine absolute, fein aufgelöste Drehposition und daraus abgeleitete Werte wie eine Drehgeschwindigkeit oder eine Drehbeschleunigung der Welle 5 ermittelt werden.

Zur ortsfesten Anbringung sind Befestigungselemente 28 an der Trägerplatte 20 angebracht.

Die Maßverkörperung 7 kann eine einzige Spur oder mehrere Spuren aufweisen. Die Sensoreinrichtung 8 kann entsprechend mit einem oder mehreren nebeneinander angeordneten, entlang der Drehachse 3 versetzten Sensorelementen ausgestattet sein. Verschiedene Spuren können beispielsweise verschiedene Maßteilungen aufweisen, um eine Messung nach dem Nonius-Prinzip zu ermöglichen. Auch ein Wiegandsensor kann zur Erfassung insbesondere der Multiturnposition verwendet werden. Aufgrund der sehr effizienten Abschirmung 12 bzw. des Abschirmkörpers 13 können diese empfindlichen Detektoren selbst in der Nähe starker magnetischer Störfelder verwendet werden. In weiteren, nicht dargestellten Ausführungsformen können natürlich auch mehrere Maßverkörperungen 7 mit entsprechenden Sensoreinrichtungen 8 vorhanden sein.

Der Abschirmkörper 13 oder der scheibenförmige Abschnitt 18 der Abschirmung 12 kann so ausgestaltet sein, dass er auf die Welle 5 aufpressbar ist. Dadurch ist eine einfache Montage möglich. In anderen Ausgestaltungen kann der Abschirmkörper 13 zum Beispiel auf die Welle aufgeschraubt werden.

Unabhängig davon, ob die Trägerplatte 20 selbst eine Abschirmung bildet, ist es von Vorteil, wenn die offene, vom Elektromotor abgewandte Seite durch eine weitere Abschirmung 29 abgeschirmt ist. Die weitere Abschirmung 29 kann mit der Abschirmung 12 drehfest verbunden sein und sich somit mit der Welle 5 mitdrehen.

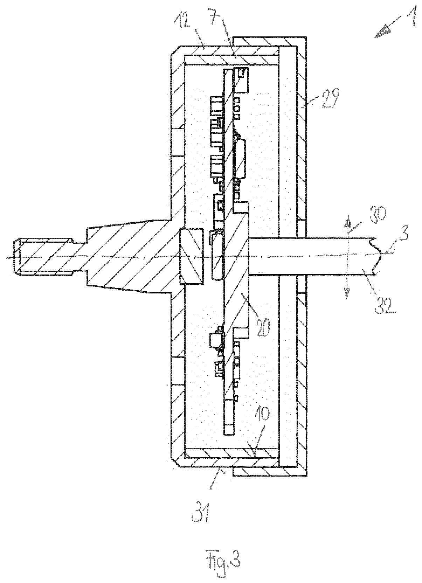

Eine solche Ausgestaltung ist in Fig. 3 gezeigt. Die weitere Abschirmung 29 ist ebenfalls glocken- oder topfförmig und überlappt in axialer Richtung, also in Richtung der Drehachse 3, 30 die elektromotorseitige Abschirmung 12. In radialer Richtung 30 betrachtet liegen somit die Abschirmungen 29, 12 übereinander. Die zusätzliche Abschirmung 29 ist am Außenumfang 31 der Abschirmung 12 befestigt, beispielsweise verschweißt, verlötet, verschraubt oder verpresst.

Die ortsfeste Abstützung der Trägerplatte 20 erfolgt zentral durch die zusätzliche Abschirmung 29 hindurch über eine zur Drehachse 3 konzentrisch verlaufende Stütze 32.In einer Modifikation der in Fig. 3 dargestellten Ausgestaltung kann die zusätzliche Abschirmung 29 auch an der Innenfläche 10 der Abschirmung 12 befestigt sein. In diesem Fall sollte an dieser Stelle die Maßverkörperung 7 nicht mehr vorhanden sein.

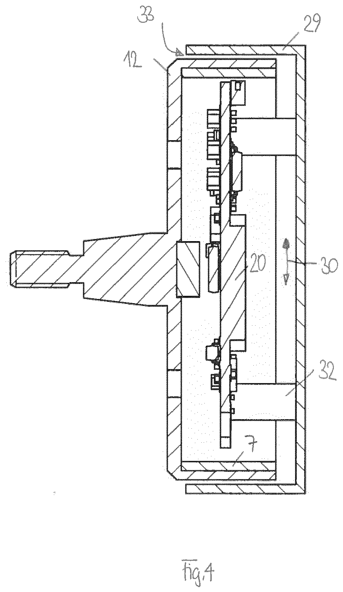

Alternativ kann die zusätzliche Abschirmung 29 auch ortsfest, also mit der Trägerplatte 20 drehfest verbunden sein. Eine solche Ausgestaltung zeigt die Fig. 4. Hierzu können eine oder mehrere Stützen 32 die Trägerplatte 20 mit der zusätzlichen Abschirmung 29 drehstarr verbinden.

Die Abschirmung 29 ist bevorzugt wieder glockenförmig und koaxial über die Abschirmung 12 geschoben. Zwischen den Abschirmungen 12, 29 befindet sich ein umlaufender, ringförmiger Spalt 33. Um durch den Spalt 33 möglicherweise eindringende magnetische Störfelder zuverlässig abzuschirmen, sollten sich in axialer Richtung die beiden Abschirmungen 12, 29 möglichst großflächig überlappen. Auch hier liegen somit in radialer Richtung 30 die beiden Abschirmungen übereinander.

Auch hier ist es natürlich gemäß einer Modifikation möglich, die zusätzliche Abschirmung 29 innerhalb der Abschirmung 12 anzuordnen. Allerdings sind dann die großen Überlappungen wie einer die elektromotorseitige Abschirmung 12 umfassenden zusätzlichen Abschirmung 29 nicht möglich, weil die Maßverkörperung 7 noch abgetastet werden muss.

Die Stütze bzw. die Stützen 32 können insbesondere hohl ausgeführt werden. So lassen sich z.B. darin auch die Signal- und Versorgungsleitungen der Messvorrichtung 2 bzw. der Auswerteelektronik 21 der Drehgeberanordnung herausführen.

Ebenso möglich ist die Zuführung eines flüssigen oder gasförmigen Mediums in die Kubatur 22, wodurch sich ein erweiterter Temperaturbereich ergibt und/oder andere Medien z.B. unerwünschte Verschmutzungen verdrängt werden. Hierzu können eine oder mehrere Stützen als eine Fluidleitung ausgestaltet sein oder eine Fluidleitung aufnehmen, durch die das Medium in die Abschirmung 7 oder aus der Abschirmung 7 geleitet ist. Eine Mündung der wenigstens einen Fluidleitung kann sich in der Kubatur 22 befinden.

## Patentansprüche

1. Drehgeberanordnung (1) mit einer Messvorrichtung (2) zur Bestimmung einer Drehposition eines drehbaren Körpers (5), wie etwa einer Welle eines Motors (6), mit wenigstens einer an dem Körper (5) befestigbaren magnetischen Maßverkörperung (7) und wenigstens einer Sensoreinrichtung (8) zur Abtastung der Maßverkörperung (7), wobei die Sensoreinrichtung (8) zumindest teilweise innerhalb eines von der Maßverkörperung (7) umgebenen Raums (14) liegt und die Maßverkörperung (7) von einer umlaufenden magnetischen Abschirmung (12) umgeben und an dieser drehfest angebracht ist.

2. Drehgeberanordnung (1) nach Anspruch 1, wobei ein Abschirmkörper (13) vorgesehen ist, in den eine Aufnahme (16) eingeformt ist, innerhalb der die Sensoreinrichtung (8) anordenbar ist.

3. Drehgeberanordnung (1) nach Anspruch 2, wobei die Aufnahme (16) an der der Sensoreinrichtung (8) zugewandten, die Sensoreinrichtung (8) in einer Umfangsrichtung (15) umschließenden Innenfläche (10) mit der Maßverkörperung (7) versehen ist.

4. Drehgeberanordnung (1) nach einem der Ansprüche 1 bis 3, wobei die Sensoreinrichtung (8) vollständig innerhalb des von der Maßverkörperung (7) umgebenen Raums (14) liegt.

5. Drehgeberanordnung (1) nach einem der Ansprüche 1 bis 4, wobei die Drehgeberanordnung (1) eine Trägerplatte (20) aufweist, die zumindest teilweise innerhalb des von der Maßverkörperung (7) umgebenen Raums (14) liegt, und auf der die Sensoreinrichtung (8) angeordnet ist.

6. Drehgeberanordnung (1) nach Anspruch 5, wobei die Trägerplatte (20) aus einem ferromagnetischen Werkstoff gefertigt ist.

7. Drehgeberanordnung (1) nach Anspruch 5 oder 6, wobei die Sensoreinrichtung (8) zwischen der Abschirmung (12) und der Trägerplatte (20) angeordnet ist.

8. Drehgeberanordnung (1) nach einem der Ansprüche 5 bis 7, wobei die Trägerplatte (20) von der Maßverkörperung (7) durch eine umlaufende Lücke (23) baulich getrennt ist.

9. Drehgeberanordnung (1) nach einem der Ansprüche 1 bis 8, wobei die Abschirmung (12) glockenförmig ausgebildet ist.

10. Drehgeberanordnung (1) nach einem der Ansprüche 1 bis 9, wobei eine weitere Abschirmung (29) vorgesehen ist, in die die Abschirmung (12) eingeschoben oder über die die Abschirmung (12) geschoben ist.

11. Drehgeberanordnung (1) nach Anspruch 10, wobei die weitere Abschirmung (29) glockenförmig ist.

12. Drehgeberanordnung (1) nach Anspruch 10 oder 11, wobei die weitere Abschirmung (29) an der Abschirmung (12) mit der Maßverkörperung (7) drehstarr befestigt ist.

13. Drehgeberanordnung (1) nach Anspruch 10 oder 11, wobei die weitere Abschirmung (29) von der Abschirmung (12) mit der Maßverkörperung (7) durch einen ringförmigen Spalt (33) getrennt und gegenüber dieser Abschirmung (12) drehbar angeordnet ist.

14. Drehgeberanordnung (1) nach einem der Ansprüche 1 bis 13, wobei eine weitere Messvorrichtung (25) mit einem Zentrumsmagneten (26) vorhanden ist, wobei der Zentrumsmagnet (26) sich an der Abschirmung (12) befindet.

15. Drehgeberanordnung (1) nach Anspruch 14, wobei die weitere Messvorrichtung (25) innerhalb der Kubatur (22) der Abschirmung (12) angeordnet ist.

## Claims

1. Encoder arrangement (1) with a measuring device (2) for determining a rotational position of a rotating body (5), such as a shaft of a motor (6), with at least one magnetic dimensional scale (7) that can be attached to the body (5) and at least one sensor device (8) for scanning the dimensional scale (7), whereby the sensor device (8) is located at least partially within a space (14) surrounded by the dimensional scale (7) and the dimensional scale (7) is surrounded by an all-round magnetic shield (12) and is non-rotatably attached to this.

2. Encoder arrangement (1) in accordance with Claim 1, whereby a shielding body (13) is provided in which a holder (16) is formed within which the sensor device (8) can be located.

3. Encoder arrangement (1) in accordance with Claim 2, whereby the holder (16) is fitted with the dimensional scale (7) on the inner surface (10) facing the sensor device (8) and enclosing the sensor device (8) in a circumferential direction (15).

4. Encoder arrangement (1) in accordance with any one of Claims 1 to 3, whereby the sensor device (8) is located completely within the space (14) enclosed by the dimensional scale (7).

5. Encoder arrangement (1) in accordance with any one of Claims 1 to 4, whereby the encoder arrangement (1) has a bearer plate (20) which is at least partially located within the space (14) enclosed by the dimensional scale (7) and on which the sensor device (8) is positioned.

6. Encoder arrangement (1) in accordance with Claim 5, whereby the bearer plate (20) is made of a ferromagnetic material.

7. Encoder arrangement (1) in accordance with Claim 5 or 6, whereby the sensor device (8) is located between the shield (12) and the bearer plate (20).

8. Encoder arrangement (1) in accordance with any one of Claims 5 to 7, whereby the bearer plate (20) is structurally separated from the dimensional scale (7) by means of an all-round gap (23).

9. Encoder arrangement (1) in accordance with any one of Claims 1 to 8, whereby the shield (12) is bell-shaped.

10. Encoder arrangement (1) in accordance with any one of Claims 1 to 9, whereby a further shield (29) is provided into which the shield (12) is pushed or over which the shield (12) is pushed.

11. Encoder arrangement (1) in accordance with Claim 10, whereby the further shield (29) is bell-shaped.

12. Encoder arrangement (1) in accordance with Claim 10 or 11, whereby the further shield (29) on the shield (12) is non-rotatably attached to the dimensional scale (7).

13. Encoder arrangement (1) In accordance with Claim 10 or 11, whereby the further shield (29) is separated from the shield (12) with the dimensional scale (7) by a ring-shaped gap (33) and is rotatably mounted vis-à-vis this shield (12).

14. Encoder arrangement (1) in accordance with any one of Claims 1 to 13, whereby a further measuring device (25) with a center magnet (26) is present, whereby the center magnet (26) is located on the shield (12).

15. Encoder arrangement (1) in accordance with Claim 14, whereby the further measuring device (25) is located within the volume (22) of the shield (12).

## Revendications

1. Arrangement de codeurs (1) avec un dispositif de mesure (2) visant à déterminer la position de rotation d'un corps rotatif (5), comme par exemple celle de l'arbre d'un moteur (6), comprenant au moins un étalon de mesure magnétique (7) pouvant se fixer sur le corps (5) et au moins un système de capteur (8) pour détection de l'étalon de mesure (7), ledit système de capteur (8) se trouvant du moins partiellement au sein de l'espace (14) entouré par l'étalon de mesure (7), et l'étalon de mesure (7) étant entouré d'un blindage magnétique (12) sur son pourtour et fixé à celui-ci de manière solidaire en rotation.

2. Arrangement de codeurs (1) selon la revendication 1, selon laquelle il est prévu un corps de blindage (13) dans lequel est aménagé un logement (16) à l'intérieur duquel pourra être disposé le système de capteur (8).

3. Arrangement de codeurs (1) selon la revendication 2, selon laquelle le logement (16), sur la surface intérieure (10) enrobant le système de capteur (8) dans la direction circonférentielle (15) et dirigée vers le système de capteur (8), est muni de l'étalon de mesure (7).

4. Arrangement de codeurs (1) selon l'une des revendications 1 à 3, selon laquelle le système de capteur (8) se trouve entièrement au sein de l'espace (14) entouré par l'étalon de mesure (7).

5. Arrangement de codeurs (1) selon l'une des revendications 1 à 4, selon laquelle l'arrangement de codeurs (1) présente une plaque support (20), laquelle se trouve du moins partiellement au sein de l'espace (14) entouré par l'étalon de mesure (7), et sur laquelle le système de capteur (8) est disposé.

6. Arrangement de codeurs (1) selon la revendication 5, selon laquelle la plaque support (20) est fabriquée dans un matériau ferromagnétique.

7. Arrangement de codeurs (1) selon la revendication 5 ou 6, selon laquelle le système de capteur (8) est disposé entre le blindage (12) et la plaque support (20).

8. Arrangement de codeurs (1) selon l'une des revendications 5 à 7, selon laquelle la plaque support (20) est physiquement séparée de l'étalon de mesure (7) par un espace vide (23) sur le pourtour.

9. Arrangement de codeurs (1) selon l'une des revendications 1 à 8, selon laquelle le blindage (12) est en forme de cloche.

10. Arrangement de codeurs (1) selon l'une des revendications 1 à 9, selon laquelle il est prévu un autre blindage (29) dans lequel sera inséré le blindage (12) ou au-dessus duquel sera inséré le blindage (12).

11. Arrangement de codeurs (1) selon la revendication 10, selon laquelle l'autre blindage (29) est en forme de cloche.

12. Arrangement de codeurs (1) selon la revendication 10 ou 11, selon laquelle l'autre blindage (29) est fixé au blindage (12) de manière solidaire en rotation avec l'étalon de mesure (7).

13. Arrangement de codeurs (1) selon la revendication 10 ou 11, selon laquelle l'autre blindage (29) est séparé par un interstice annulaire (33) du blindage (12) avec l'étalon de mesure (7) et est disposé de manière solidaire en rotation par rapport à ce blindage (12).

14. Arrangement de codeurs (1) selon l'une des revendications 1 à 13, selon laquelle il est prévu un autre dispositif de mesure (25) comprenant un aimant au centre (26), cet aimant au centre (26) se trouvant sur le blindage (12).

15. Arrangement de codeurs (1) selon la revendication 14, selon laquelle l'autre dispositif de mesure (25) est disposé dans la cubature (22) du blindage (12).
